(19) Europäisches Patentamt
European Patent Office
Office européen des brevets

(11) Veröffentlichungsnummer: **0 100 808**
**A2**

(12) # EUROPÄISCHE PATENTANMELDUNG

(21) Anmeldenummer: 82810411.7

(22) Anmeldetag: 04.10.82

(51) Int. Cl.³: D 06 P 1/52
C 09 D 7/12, B 41 M 5/02
D 06 P 5/00

(30) Priorität: 06.08.82 CH 4751/82

(43) Veröffentlichungstag der Anmeldung:
22.02.84 Patentblatt 84/8

(84) Benannte Vertragsstaaten:
CH DE FR GB IT LI

(71) Anmelder: CIBA-GEIGY AG
Patentabteilung Postfach
CH-4002 Basel(CH)

(72) Erfinder: Défago, Raymond
Bäumlihofstrasse 421
CH-4125 Riehen(CH)

(72) Erfinder: Sütterlin, Wolfgang
Brunnenstrasse 7
D-7850 Lörrach-Haagen(DE)

(72) Erfinder: Bäuerle, Rolf
Im Hirshalm 9
CH-4125 Riehen(CH)

(54) **Verdickungsmittel und ihre Verwendung in Druckpasten zum Bedrucken von Zwischenträgern für den Transferdruck.**

(57) Ein strukturviskoses Verdickungsmittel, das ein Copolymerisat aus Acrylsäure und Acrylamid, ein Bindemittel, ein Entlüftungsmittel und gegebenenfalls Lösungsmittel, Emulgatoren und Neutralisationsmittel enthält, und welches gegebenenfalls als Wasser-in-Oel Emulsion vorliegt, ist besonders geeignet, im Transferdruckverfahren in Druckpasten zum Färben und Bedrucken von Zwischenträgern und von Fasermaterialien, insbesondere synthetischen, textilen Geweben, eingesetzt zu werden.

EP 0 100 808 A2

CIBA-GEIGY AG
Basel (Schweiz)

1-14044 /-

# Verdickungsmittel und ihre Verwendung in Druckpasten zum Bedrucken von Zwischenträgern für den Transferdruck

Das Färben und Bedrucken von Fasermaterialien für den Transferdruck stellt hohe Anforderungen an die rheologischen Eigenschaften der Druckpasten, die beim Bedrucken des Zwischenträgers in zeitgemässen Druckmaschinen oft hohen Scherkräften ausgesetzt werden. Zweckdienlich sind deshalb vor allem strukturviskose Druckpasten, bei welchen die Viskosität unter dem Einfluss von Scherkräften abnimmt, d.h. bei welchen sich die ursprüngliche Viskosität wieder einstellt, sobald der Einfluss der Scherkräfte aufhört. Solche strukturviskose Druckpasten weisen einen relativ niedrigen Fliessindex, d.h. fliessen leicht unter dem Einfluss von Scherkräften und verteilen sich gleichmässig z.B. in den Schablonen der Rotationsfilmdruckmaschinen. ~~Zudem sind~~ sie leicht rührbar und pumpbar. Bisher verwendete, strukturviskose Druckpasten enthalten in der Regel Homopolymerisate auf Basis von Acrylsäure. Diese bekannten Druckpasten weisen jedoch den Nachteil auf, dass bei hohen, langwirkenden Scherbeanspruchungen ein permanenter Viskositätsverlust der Druckpasten eintreten kann.

Der vorliegenden Erfindung liegt somit die Aufgabe zugrunde, Druckpasten zur Verfügung zu stellen, die gegen hohe und langwirkende Scherkräfte, wie sie in modernen Druckmaschinen auftreten, besonders beständig sind. Diese Aufgabe wird unerwarteterweise dadurch gelöst, dass als Verdickungsmittel in der Druckpaste ein Copolymerisat aus Acylsäure und Acrylamid neben einem Bindemittel und einem Entlüftungsmittel mitverwendet wird.

Gegenstand der Erfindung ist somit ein Verdickungsmittel das dadurch gekennzeichnet ist, dass es in neuartiger Kombination

(A) ein Copolymerisat aus Acrylsäure und Acrylamid,
(B) ein Bindemittel und
(C) ein Entlüftungsmittel
enthält.

Die Verwendung des Verdickungsmittels in wässrigen Druckpasten zum Färben und Bedrucken von Zwischenträgern im Transferdruck, das Applikationsverfahren zum Bedrucken der Zwischenträger und Transferieren der Farbstoffe auf Fasermaterialien, die Druckpaste zur Durchführung des Applikationsverfahrens und die nach Transferdruckverfahren bedruckten Zwischenträger und Fasermaterialien bilden weitere Gegenstände der vorliegenden Erfindung.

Als Komponente (A) des erfindungsgemässen Verdickungsmittels kommen vor allem hochmolekulare Copolymerisate in Frage, welche ein Molverhältnis Acrylsäure: Acrylamid von 1:0,9 bis 1:1,1 und ein Molekulargewicht von der Grössenordnung von $10^6$, etwa $1 \cdot 10^6$ bis $6 \cdot 10^6$, insbesondere $2 \cdot 10^6$ bis $3 \cdot 10^6$ aufweisen, wobei das Copolymerisat als Aktivsubstanz der Komponente (A) in wässrigem Medium, d.h. durch von Wasser, vorteilhafterweise strukturviskos ist. Die Copolymerisate der angegebenen Art sind in der Regel mindestens teilweise vernetzt und weisen somit vorwiegend verzweigte Ketten auf.

Solche Copolymerisate werden nach an sich bekannten Methoden hergestellt, indem vorzugsweise äquimolare Mengen Acrylsäure und Acrylamid in der Regel in wässrigem Medium copolymerisiert werden. Hierbei ist es vorteilhaft, die Copolymerisationsreaktion bei Raumtemperatur, z.B. 20°C, zu beginnen und bei allmählich steigenden Temperaturen bis etwa 60°C weiterzuführen. Zudem können bei der Copolymerisation zweckmässig Stabilisatoren und Aktivatoren, z.B. Persulfate, Pyrosulfite und Peroxyde, sowie in der Regel Vernetzungsmittel, z.B. olefinische Doppelbindungen enthaltende Verbindungen, vorzugsweise Vinyl- oder Allylverbindungen, insbesondere Triallylisocyanurat eingesetzt werden. Solche Copolymerisate sind an sich bekannt und z.B. in der europäischen Patentanmeldung 42 678 beschrieben.

Als Komponente (B) des erfindungsgemässen Verdickungsmittels kommen filmbildende, handelsübliche Polymere in Betracht, z.B. Copolymerisate aus Acrylsäureestern und Vinylacetaten, die vorzugsweise als Emulsionen eingesetzt werden oder vor allem Cellulosederivate, die als wässrige, klare, d.h. quallenfreie Lösungen vorliegen, die z.B. Hydroxyäthylcellulose oder Methylcellulose als Aktivsubstanzen enthalten. Indessen sind Vinylpolymere, z.B. zu Polyvinylalkoholen hydrolysierte Polyvinylacetate als Aktivsubstanz des Bindemittels als Komponente (B) bevorzugt. Im Vordergrund des Interesses stehen Polyvinylalkohole eines Molekulargewichtes von $1 \cdot 10^5$ bis $3 \cdot 10^5$ und eines Hydrolysegrades von 80 bis 90, insbesondere 85 bis 90 Mol%, welche vorzugsweise als wässrige, verdünnte Lösungen eingesetzt werden, die einen Aktivsubstanzgehalt von etwa 10 bis 30 Gewichtsprozent aufweisen.

Grundsätzlich sind alle handelsübliche Entlüftungsmittel als Komponente (C) der erfindungsgemässen Verdickungsmittel einsetzbar, vorausgesetzt, dass sie keinen in Betracht fallenden, ionischen Charakter aufweisen, welcher die erwünschten rheologischen Eigenschaften des Verdickungsmittels beeinträchtigen würde. So kommen z.B. nicht-ionische, handelsübliche Silikonöle oder Silikonölemulsionen als Komponente (C) in Frage. Silikonöle weisen jedoch neben guten Entschäumungseigenschaften nur schwache Entlüftungseigenschaften auf. Bevorzugt sind deshalb für ihren Einsatz als Komponente (C) silikonölarme bis silikonölfreie Entlüftungsmittel, die im allgemeinen 0 bis 10, insbesondere 2 bis 8 Gewichtsprozent eines herkömmlichen Silikonöls enthalten.

Bevorzugte Entlüftungsmittel enthalten z.B. als Aktivsubstanz hochsiedende Kohlenwasserstoffe, hydrierte Naphthalene, Mineralöle, fette Oele oder unlösliche Metallseifen oder deren Gemische und weisen gegebenenfalls den vorstehend angegebenen Gehalt an Silikonöle auf. Sie können aber auch als wässrige Lösungen vorliegen, die im allgemeinen, zusätzlich zu den Aktivsubstanzen der angegebe- Art ein nicht-ionisches Tensid, z.B. Aethylenoxydaddukte von einem Alkylphenol enthalten. Als bevorzugte Inhaltsstoffe bzw. Aktivsubstanzen der Entlüftungsmittel seien höhere Alkohole mit Siedepunkten über 100°C, Terpentinöle, Mineralöle oder deren Gemische erwähnt. Bevorzugt werden Kohlenwasserstoffgemische eingesetzt die im allgemeinen einen Flammpunkt über 120°C, vorzugsweise von 150 bis 220°C und einen Siedebereich von etwa 250 bis etwa 500°C (unter Normalbedingungen, bzw. bis höchstens etwa 300°C unter vermindertem Druck) aufweisen.

Im Vordergrund des Interesses stehen Entlüftungsmittel, die als Aktivsubstanzen ein Octanol oder dessen Gemisch mit hochsiedendem Kohlenwasserstoffgemischen enthalten, welches den vorstehend angegebenen Gehalt an Silikonöle aufweisen und gegebenenfalls als wässrige Zubereitung vorliegt, wobei diese Zubereitung zusätzlich zu den Aktivsubstanzen Aethylenoxydaddukte von einem Alkylphenol mit 6 bis 12 Kohlenstoffatomen im Alkylrest als Tensid enthält.

Als Beispiele von Vertretern solcher Entlüftungsmittel seien eine wässrige Zubereitung, die

10 bis 15 Gewichtsprozent 2-Aethyl-n-hexanol,

5 bis 10 Gewichtsprozent eines Silikonöls,

15 bis 25 Gwwichtsprozent eines Adduktes aus 2 bis 9 Mol Aethylenoxyd und 1 Mol p-Nonylphenol und

50 bis 70 Gewichtsprozent Wasser

enthält, oder insbesondere ein wasserfreies Gemisch aus

67 bis 89 Gewichtsprozent 2-Aethyl-n-hexanol,

10 bis 30 Gewichtsprozent eines Kohlenwasserstoffgemisches eines Siedebereiches von 300 bis 500°C und

1 bis 3 Gewichtsprozent eines Silikonöles

genannt.

Bevorzugte Verdickungsmittel enthalten im allgemeinen
5 bis 20 Gewichtsprozent der Komponente (A)
60 bis 85 Gewichtsprozent der Komponente (B) und
10 bis 20 Gewichtsprozent der Komponente (C),
bezogen auf Aktivsubstanzgehalt der Komponenten (A), (B) und (C).

In der Regel liegt die Komponente (A) im Verdickungsmittel als wässrig-organische Wasser-in-Oel Emulsion vor, die zusätzlich zum Copolymerisat aus Acrylsäure und Acrylamid, das als Aktivsubstanz eingesetzt wird, ein wasserlösliches Lösungsmittel, Emulgatoren und ein Neutralisationsmittel enthält.

Als Lösungsmittel für die Oelphase kommen vor allem Kohlenwasserstoffe, z.B. technisches Lackbenzin oder technische Paraffinöle, insbesondere die im Handel erhältlichen Paraffinöle (z.B. ISOPAR®-Marken von ESSO) in Betracht. Solche Lösungsmittel weisen in der Regel einen Flammpunkt über etwa 30°C, vorzugsweise von 50 bis 100°C, einen Siedebereich von etwa 160 bis etwa 220°C und ein mittleres Molekulargewicht von etwa 150 bis etwa 180 auf.

Bei den Emulgatoren ist der Einsatz eines Wasser-in-Oel Emulgators in Gemisch mit einem Oel-in-Wasser Emulgator besonders zweckmässig, um lagerstabile Wasser-in-Oel Emulsionen des Verdickungsmittels zu erhalten. Als Oel-in-Wasser Emulgatoren kommen z.B. Alkanolamide höhermolekularer Fettsäuren, insbesondere Aethanolamide von ungesättigten oder vorzugsweise gesättigten Fettsäuren mit 12 bis 22, vorzugsweise 12 bis 18 Kohlenstoffatomen wie Linol-, Linolen-, Oel-, Laurin-, Palmitin- und Stearinsäure vor allem in Form ihrer technischen Gemische, Alkylen- oder vor allem Aethylenoxydaddukte aus Fettalkoholen, wobei sich die Fettalkohole von den vorstehend angegebenen Fettsäuren ableiten, z.B. Addukte aus Oleylalkohol und Aethylenoxyd, Alkylen- vor allem Aethylenoxydaddukte von Estern

aus Polyalkoholen wie Pentaerythrit oder Sorbit bzw. Anhydrosorbite und den Fettsäuren der vorstehend angegebenen Art, insbesondere Aethylenoxydaddukte von Sorbitanfettsäureestern in Betracht. Als Wasser-in-Oel Emulgatoren werden vor allem die soeben beschriebenen Ester aus Polyalkoholen und Fettsäuren, z.B. Sorbitanfettsäureester, eingesetzt.

Als Neutralisationsmittel kommen Ammoniak, vorzugsweise als wässrige Lösung, Alkanolamine, d.h. Mono-, Di- und Trialkanolamine mit je 1 bis 4, vorzugsweise 2 oder 3 Kohlenstoffatomen im Alkanolrest, z.B. Triäthanolamin, und vor allem Alkalimetallhydroxyde, wie Kalium- und insbesondere Natriumhydroxyd, vorzugsweise in Form ihrer wässrigen Lösungen, in Betracht.

Besonders lagerstabile, strukturviskose Wasser-in-Oel Emulsionen der Komponente (A) im Verdickungsmittel enthalten

15 bis 30 Gewichtsprozent des Copolymerisates aus Acrylsäure und Acrylamid
10 bis 30 Gewichtsprozent Paraffinöl,
3 bis 15 Gewichtsprozent Aethanolamide von Fettsäuren, sowie Sorbitanfettsäureester und deren Addukte mit Aethylenoxyd,
5 bis 10 Gewichtsprozent einer wässrigen 25 bis 35 gewichtsprozentigen Natriumhydroxydlösung
15 bis 67 Gewichtsprozent Wasser.

Die erfindungsgemässen Verdickungsmittel werden bei ihrer Verwendung in Druckpasten mit handelsüblichen Farbstofformulierungen vermischt. Hierbei werden vorzugsweise die Komponente (A), in der Regel in Form ihrer vorstehend angegebenen Wasser-in-Oel Emulsion und die Komponenten (B) und (C) mit den Farbstofformulierungen vermischt. Da in der Regel die Wasser-in-Oel Emulsionen die Neutralisationsmittel der angegebenen Art enthalten, weisen die so hergestellten, bevorzugten Druckpasten einen pH Wert von 6 bis 9, insbesondere 6,5

bis 8 auf.

Als Farbstoffformulierungen kommen vor allem elektrolytarme Formulierungen von in Wasser unlöslichen bis schwerlöslichen Dispersionsfarbstoffen in Betracht, wie sie z.B. in der deuschen Offenlegungsschrift 2 850 482 beschrieben sind. Es können aber auch salzhaltige Handelsformulierungen eingesetzt werden, sofern allfällige, durch die Elektrolyte bewirkte Viskositätsverluste durch Erhöhung der Verdickungsmittelmenge in der Druckpaste kompensiert wird.

Die in den Formulierungen in Frage kommenden Farbstoffe sind die üblichen für das Thermotransferdruckverfahren geeigneten sublimierbaren Dispersionsfarbstoffe, die bei etwa 160 bis etwa 220°C in den Dampfzustand übergehen, d.h. Farbstoffe, deren Dampfdruck bei z.B. 200°C höher als $10^{-5}$ bar ist. Sie gehören u.a. der Klasse der Nitrofarbstoffe der Anilinreihe, der Azofarbstoffe der Benzolreihe, sowie der Anthrachinon-, Chinolin-, Pyrazolon-, Triazol-, Pyridon- oder Styrylfärbstoffe an und sind z.B. in Colour Index, 3. Auflage, 1971, unter der Rubrik "Disperse dyes" beschrieben.

Neben den Farbstofformulierungen und den erfindungsgemässen Verdickungsmitteln können die Druckpasten gegebenenfalls übliche Zusätze wie z.B. Lösungsmittel und Emulgatoren enthalten. Lackbenzin als Lösungsmittel und Alkylenoxydaddukte von Fettalkoholen, z.B. Aethylenoxydaddukte des Oleylalkohols als Oel-in-Wasser Emulgatoren sind als fakultative Zusätze von Druckpasten von praktischer Bedeutung. Bevorzugte Druckpasten, die ein wasserunlösliches Lösungsmittel enthalten, liegen in der Regel als strukturviskose Oel-in-Wasser Emulsionen vor.

Die im Vordergrund des Interesses stehenden, strukturviskosen Druckpasten enthalten

1 bis 30, vorzugsweise 1 bis 15 Gewichtsprozent einer Farbstofformulierungen,
5 bis 25 Gewichtsprozent des Verdickungsmittels und
45 bis 94 Gewichtsprozent Wasser.

Falls das Verdickungsmittel in seiner bevorzugten Ausführungsform als Wasser-in-Oel Emulsion vorliegt, werden vorzugsweise 3 bis 25 Gewichtsprozent dieses Verdickungsmittels in der Druckpaste eingesetzt. Bei den elektrolytarmen, bevorzugten Farbstofformulierungen der vorstehend angegebenen Art werden vorzugsweise 3 bis 15, insbesondere 5 bis 12 Gewichtsprozent des emulgierten Verdickungsmittels in der Druckpaste eingesetzt. Höhere Mengen an emulgierte Verdickungsmittel, bis z.B. 25 Gewichtsprozent, werden vor allem bei elektrolythaltigen Farbstofformulierungen eingesetzt. Vor ihrem Einsatz in den Druckpasten werden bevorzugte Wasser-in-Oel Emulsionen des Verdickungsmittels mit dem zur Herstellung der Druckpaste verwendeten Wasser vorgängig vermischt um in Stammansätzen, d.h. in den sogenannten Stammverdickungen, eine Phaseninversion von Wasser-in-Oel zu Oel-in-Wasser zu bewerkstelligen.

Beim Bedrucken der Zwischenträger mit den Druckpasten der vorstehend angegebenen Art, welche das erfindungsgemässe Verdickungsmittel enthalten, wird die Druckpaste vorzugsweise stellenweise auf den Zwischenträger aufgebracht, wobei Druckmaschinen üblicher Bauart, z.B. Tiefdruck-, Rotationssiebdruck- und Flachfilmdruckmaschinen zweckmässig eingesetzt werden.

Der im Transferdruckverfahren eingesetzte Zwischenträger ist zweckmässig ein flexibles, vorzugsweise räumlich stabiles Band, ein Streifen oder eine Folie mit vorteilhaft glatter Oberfläche, welche hitzestabil und inert sind, d.h. keinerlei Affinität zu den verschieden Komponenten der Druckpasten aufweisen, und aus verschiedensten Arten von Materialien bestehen, z.B. Metall, wie

eine Aluminium- oder Stahlfolie; Kunststoff, Papier oder textile Flächengebilde, die gegebenenfalls mit einem Film aus Vinylharz, Aethylcellulose oder Polyurethanharz beschichtet sein können. Zweckmässig verwendet man flexible Folien aus Aluminium oder, wegen des niedrigen Gestehungspreises, vor allem Papier.

Im Transferdruckverfahren wird der bedruckte Zwischenträger vorzugsweise bei 80 bis 140°C, insbesondere 100 bis 120°C während etwa 5 bis 20 Sekunden getrocknet. Zum Färben und Bedrucken des Fasermaterials wird anschliessend der Zwischenträger mit dem Fasermaterial in Kontakt gebracht und z.B. in einer Bügelpresse oder einem Kalander unter Anwendung von Druck einer Wärmebehandlung vorzugsweise von 120 bis 220, insbesondere 190 bis 210°C während 5 bis 90, insbesondere 20 bis 60 Sekunden unterworfen, wobei der Farbstoff vom Zwischenträger auf das Fasermaterial transferiert.

Nach beendeter Wärmebehandlung wird das bedruckte Fasermaterial vom Zwischenträger getrennt. Das so bedruckte Fasermaterial bedarf in der Regel keiner Nachbehandlung, d.h. im allgemeinen weder einer Dampfbehandlung, um den Farbstoff zu fixieren, noch eines Waschens, um die Echtheiten zu verbessern.

Bei den zu bedruckenden Fasermaterialien handelt es sich in der Regel um Textilmaterialien, vorzugsweise um flächenförmige Gebilde wie Vliese, Filze, vor allem Teppiche, Gewirke und insbesondere Gewebe. Hierbei kommen Textilmaterialien aus halbsynthetischen und insbesondere vollsynthetische Fasern oder deren Gemische in Betracht. Bei den halbsynthetischen Fasern handelt es sich hauptsächlich um regenerierte Cellulosefasern, z.B. Viskosefasern und vor allem Acetatfasern (2 1/2- und Triacetat) und bei den vollsynthetischen Fasern hauptsächlich um Polyacrylnitril-, Polyamid- und insbesondere Polyesterfasern. Auch Mischgewebe aus Triacetat und Polyamid sind geeignet, nach dem erfindungsgemässen Verfahren bedruckt zu werden.

Indessen stehen vollsynthetische Gewebe aus Polyacrylnitril, Triacetat oder Polyester oder deren Gemische oder vor allem Gewebe aus reinem Polyacrylnitril oder insbesondere aus reinem Polyester im Vordergrund des Interesses.

Der Einsatz der Komponenten (A), (B), (C) und gegebenenfalls (D) der vorstehend angegebenen Art im erfindungsgemässen Verdickungsmittel bietet bei den daraus hergestellten Druckpasten die folgenden unvorhersehbaren Vorteile:

- hohe Beständigkeit der Druckpaste, wie eingangs bereits erwähnt, gegen hohe und langwirkende Scherkräfte
- gute Standschärfe der erhaltenen Musterungen beim stellenweisen Bedrucken der Druckpasten auf dem Zwischenträger
- gute Reibechtheit und Lagerhaltbarkeit der bedruckten Zwischenträger
- gute Transferierbarkeit der Farbstoffe aus der Druckpaste vom Zwischenträger auf das Textilmaterial
- egale Musterungen mit äusserst scharfen Konturen auf dem Textilmaterial nach dem Transferieren der Farbstoffe aus dem Zwischenträger
- gute Rührbarkeit der Druckpasten bzw. gute Zügigkeit von hochkonzentrierten Stammansätzen der Verdickungsmittel dank ihrem relativ niedrigen Fliessindex
- relativ niedrige Elektrolytempfindlichkeit, die den Einsatz sowohl von salzhaltigen Farbstofformulierungen als auch von elektrolytarmen Farbstofformulierungen gestattet.

Die in den nachfolgenden Beispielen angegebenen Prozente beziehen sich auf das Gewicht.

Beispiel 1: Ein Zwischenträger aus Papier wird mit einer Rotationssiebdruckmaschine mit einer Druckpaste der folgenden Zusammensetzung stellenweise bedruckt:

100 g/kg einer elektrolytarmen, dispergierten Handelsformulierung des roten Dispersionsfarbstoffes der Formel

(1) 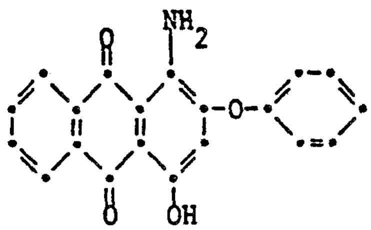

40 g/kg einer strukturviskosen Wasser-in-Oel Emulsion aus
25,0 % eines mit Triallylisocyanurat vernetzten Copolymerisates aus äquimolaren Mengen Acrylsäure und Acrylamid, das ein Molekulargewicht von 2 bis 3 Millionen aufweist,
1,4 % eines Wasser-in-Oel Emulgators (Sorbitanmonooleat),
3,6 % eines Oel-in-Wasser Emulgators (Gemisch 2:1 eines Aethanolamids von Fettsäuren und eines Adduktes aus Sorbitanmonooleat und 80 Mol Aethylenoxyd),
18,8 g Paraffinöl (Flammpunkt: 60°C, Siedebreich: 188 bis 206°C),
44,2 % entionisiertem Wasser und
7,0 % einer 30%igen, wässrigen Natriumhydroxydlösung,

150 g/kg einer 20%igen, wässrigen Lösung aus einem zu Polyvinylalkohol hydrolysierten Polyvinylacetat, dass ein Molekulargewicht von ca. 20'000, ein Hydrolysegrad von ca. 88 Mol%, eine Esterzahl von ca. 140, einen Restacetylgehalt von ca. 15% und ein Polymerisationsgrad von ca. 530 aufweist,

5 g/kg eines Gemisches aus
80 % 2-Aethyl-n-hexanol,
18 % eines Kohlenwasserstoffgemisches aus 63 % Paraffinen, 29 % Naphthenen und 8 % Aromaten eines Siedebereiches von 340 bis 470°C und eines Flammpunktes von ca. 200°C,

2 % Silikonöls und

750 g/kg entionisiertes Wasser.

Die als strukturviskose Oel-in-Wasser Emulsion vorliegende Druckpaste weist einen pH-Wert von 6,8 und eine apparente Viskosität (Scheinviskosität), gemessen am Brookfield-Viskosimeter RVT mit Spindel 6 bei 20°C und 20 Umdrehungen/Minute, von 15'750 mPa•s auf.

Der bedruckte Zwischenträger wird bei 100°C während 8 Sekunden getrocknet. Der erhaltene Zwischenträger ist lagerfähig und reibecht.

Nun wird im Transferdruckverfahren die bedruckte Seite des Zwischenträgers mit einem Polyestergewebe eines Flächengewichtes von 100 $g/m^2$ in Kontakt gebracht, hierauf der Zwischenträger und das Gewebe während 30 Sekunden bei 210°C in einer Bügelpresse zusammengepresst, wobei der Farbstoff vom Zwischenträger auf das Gewebe im Umdruckverfahren transferiert.

Man erhält auf dem Polyestergewebe, das einen weichen Griff aufweist, einen roten, musterförmigen Druck auf weissem Grund mit guter Egalität, guten Echtheiten und mit scharfen Konturen.

Beispiel 2: Ein Zwischenträger aus Papier wird mit einer Tiefdruckmaschine mit einer Druckpaste der folgenden Zusammensetzung stellenweise bedruckt:

100 g/kg einer elektrolytarmen, dispergierten Handelsformulierung des blauen Dispersionsfarbstoffes der Formel

(2) 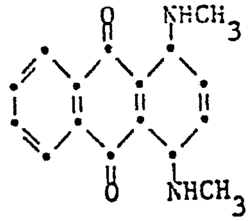

25 g/kg der in Beispiel 1 angegebenen, strukturviskosen Wasser-in Oel Emulsion des Copolymerisates aus Acrylsäure und Acrylamid,

180 g/kg der in Beispiel 1 angegebenen wässrigen Lösung des Polyvinylalkohols,

5 g/kg des in Beispiel 1 angegebenen Gemisches aus Kohlenwasserstoffen und Silikonölen in 2-Aethyl-n-hexanol und

690 g/kg entionisiertes Wasser.

Die gemäss Beispiel 1 gemessene, apparente Viskosität der als strukturviskose Oel-in-Wasser Emulsion vorliegenden Druckpaste beträgt 4'000 mPa•s und deren pH-Wert 7,2. Der bedruckte Zwischenträger wird bei 120°C während 8 Sekunden getrocknet. Der erhaltene Zwischenträger ist lagerfähig und reibecht.

Nun wird im Transferdruckverfahren die bedruckte Seite des Zwischenträgers mit einem Polyacrylnitrilgewebe eines Flächengewichtes von 180 $g/m^2$ in Kontakt gebracht, hierauf der Zwischenträger und das Gewebe während 30 Sekunden bei 210°C in einem Kalander zusammengepresst, wobei der Farbstoff vom Zwischenträger auf das Gewebe im Umdruckverfahren transferiert.

Man erhält auf dem Polyacrylnitrilgewebe, das einen weichen Griff aufweist, einen kräftig blauen, musterförmigen Druck auf weissem Grund mit guter Egalität, guten Echtheiten und mit scharfen Konturen.

Beispiel 3: Ein Zwischenträger aus Papier wird mit einer Flachfilmdruckmaschine mit einer Druckpaste der folgenden Zusammensetzung stellenweise bedruckt:

40 g/kg einer elektrolytarmen, dispergierten Handelsformulierung des gelben Dispersionsfarbstoffes der Formel

(3) 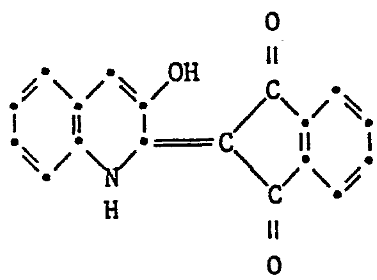 ,

20 g/kg einer elektrolytarmen, dispergierten Handelsformulierung des roten Dispersionsfarbstoffes der Formel

(4) 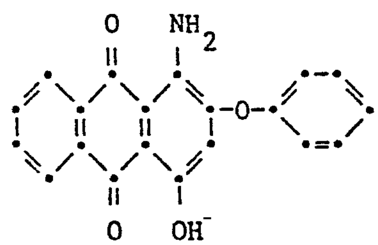 ,

20 g/kg einer elektrolytarmen, dispergierten Handelsformulierung des blauen Dispersionsfarbstoffes der Formel

(5) 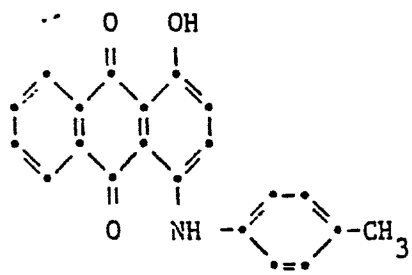 ,

40 g/kg der in Beispiel 1 angegebenen Wasser-in-Oel Emulsion des Copolymerisates aus Acrylsäure und Acrylamid,

150 g/kg der in Beispiel 1 angegebenen wässrigen Lösung des Polyvinylalkohols,

5 g/kg des in Beispiel 1 angegebenen Gemisches aus Kohlenwasserstoffen und Silikonölen in 2-Aethyl-n-hexanol und

725 g/kg entionisiertes Wasser.

Die gemäss Beispiel 1 gemessene, apparente Viskosität der als strukturviskose Oel-in-Wasser Emulsion vorliegenden Druckpaste beträgt 14'250 mPa•s und deren pH-Wert 6,9. Der erhaltene Zwischenträger ist lagerfähig und reibecht.

Nun wird im Transferdruckverfahren die bedruckte Seite des Zwischenträgers mit einem Polyestergewebe eines Flächengewichtes von 170 $g/m^2$ in Kontakt gebracht, hierauf der Zwischenträger und das Gewebe während 30 Sekunden bei 210°C in einer Bügelpresse zusammengepresst, wobei der Farbstoff vom Zwischenträger auf das Gewebe im Umdruckverfahren transferiert.

Man erhält mit dieser Trichromie auf dem Polyestergewebe, das einen weichen Griff aufweist, einen braunen, musterförmigen Druck ausgezeichneter Egalität auf weissem Grund mit guten Echtheiten und scharfen Konturen.

Patentansprüche

1. Verdickungsmittel, dadurch gekennzeichnet, dass es
(A) ein Copolymerisat aus Acrylsäure und Acrylamid,
(B) ein Bindemittel und
(C) ein Entlüftungsmittel
enthält.

2. Verdickungsmittel nach Anspruch 1, dadurch gekennzeichnet, dass es als Komponente (A) ein Copolymerisat enthält, welches ein Molverhältnis Acrylsäure:Acrylamid von 1:0,9 bis 1:1,1 aufweist und dessen Molekulargewicht $1 \cdot 10^6$ bis $6 \cdot 10^6$ beträgt.

3. Verdickungsmittel nach Anspruch 2, dadurch gekennzeichnet, dass es als Komponente (A) ein mindestens teilweise vernetztes Copolymerisat enthält, das in wässrigem Medium strukturviskos ist.

4. Verdickungsmittel nach Anspruch 1, dadurch gekennzeichnet, dass es als Komponent (B) filmbildende Copolymerisate aus Acrylsäureestern und Vinylacetaten, Cellulosederivate oder Vinylpolymere, vorzugsweise Hydroxyäthylcellulose, Methylcellulose oder zu Polyvinylalkoholen hydrolysierte Polyvinylacetate, insbesondere Polyvinylalkohole eines Molekulargewichtes von $1 \cdot 10^5$ bis $3 \cdot 10^5$ und eines Hydrolysegrades von 80 bis 90 Mol.% enthält.

5. Verdickungsmittel nach Anspruch 1, dadurch gekennzeichnet, dass es als Komponente (C) ein siliconölarmes bis siliconölfreies Entlüftungsmittel, vor allem siliconölhaltige oder siliconölfreie hochsiedende Kohlenwasserstoffe, hydrierte Naphthalene, Mineralöle, fette Oele oder unlösliche Metallseifen oder deren Gemische, vorzugsweise siliconölhaltige oder siliconölfreie höhere Alkohole eines Siedepunktes über 100°C, Terpentinöle, Mineralöle oder deren Gemische, insbesondere ein Octanol oder dessen Gemisch mit

hochsiedenden Kohlenwasserstoffgemischen enthält, welches einen Gehalt an Siliconöl aufweist.

6. Verdickungsmittel nach einem der Ansprüche 1 bis 5, dadurch gekennzeichnet, dass es
5 bis 20 Gewichtsprozent der Komponente (A),
60 bis 85 Gewichtsprozent der Komponente (B) und
10 bis 20 Gewichtsprozent der Komponente (C), enthält,
bezogen auf den Aktivsubstanzgehalt der Komponente (A), (B) und (C).

7. Verdickungsmittel nach einem der Ansprüche 1 bis 6, dadurch gekennzeichnet, dass es die Komponenten (A), (B) und (C) enthält, wobei die Komponente (A) als Wasser-in-Oel Emulsion vorliegt, die zusätzlich zum Copolymerisat aus Acrylsäure und Acrylamid ein wasserunlösliches Lösungsmittel, Emulgatoren und ein Neutralisationsmittel enthält, wobei man vorzugsweise Kohlenwasserstoff, insbesondere technische Paraffinöle als Lösungsmittel, Alkanolamide höhermolekularer Fettsäuren oder Ester aus Polyalkoholen und höhermolekularen Fettsäuren und deren Addukte mit Alkylenoxyden, insbesondere Aethanolamide von Fettsäuren, Sorbitanfettsäureester und deren Addukte mit Aethylenoxyd als Emulgatoren und Ammoniak, Alkanolamine oder Alkalimetallhydroxide, insbesondere Natriumhydroxyd als Neutralisationsmittel einsetzt.

8. Verdickungsmittel nach Anspruch 7, dadurch gekennzeichnet, dass es die Komponenten (A), (B) und (C) enthält, wobei die Komponente (A) als strukturviskose Wasser-in-Oel Emulsion vorliegt, die
15 bis 30 Gewichtsprozent des Copolymerisates aus Acrylsäure und Acrylamid,
10 bis 30 Gewichtsprozent Paraffinöl,
3 bis 15 Gewichtsprozent Aethanolamide von Fettsäuren, Sorbitanfettsäureester und deren Addukte mit Aethylenoxyd,
5 bis 10 Gewichtsprozent einer wässrigen, 25 bis 35 gewichtsprozentigen Natriumhydroxydlösung und

15 bis 67 Gewichtsprozent Wasser
enthält.

9. Verwendung des Verdickungsmittels gemäss einem der Ansprüche 1 bis 8 in wässrigen Druckpasten zum Bedrucken von Zwischenträgern im Transferdruck.

10. Verfahren zum Färben und Bedrucken von Fasermaterialien im Transferdruck unter Verwendung von wässrigen Druckpasten aus Farbstoffformulierungen zum Bedrucken des Zwischenträgers, dadurch gekennzeichnet, dass die Druckpaste das Verdickungsmittel gemäss einem der Ansprüche 1 bis 8 enthält.

11. Wässrige Druckpaste zur Durchführung des Verfahrens gemäss Anspruch 10, dadurch gekennzeichnet, dass sie strukturviskos ist und neben einer Farbstofformulierung und gegebenenfalls weiteren üblichen Zusätzen das Verdickungsmittel gemäss einem der Ansprüche 1 bis 8 enthält.

12. Druckpaste nach Anspruch 11, dadurch gekennzeichnet, dass sie
1 bis 30 Gewichtsprozent einer Farbstofformulierung,
5 bis 25 Gewichtsprozent eines Verdickungsmittels gemäss einem der Ansprüche 1 bis 8,
45 bis 94 Gewichtsprozent Wasser
enthält und einen bevorzugten pH-Wert von 6 bis 9 aufweist.

13. Der nach dem Verfahren gemäss Anspruch 19 bedruckte Zwischenträger für den Transferdruck, vorzugsweise bedruckte, flexible Papierfolien, und das damit bedruckte Fasermaterial.

14. Material nach Anspruch 13, dadurch gekennzeichnet, dass es textile synthetische Fasern, vorzugsweise Polyester-, Polyamid-,

Polyacrylnitril- oder Cellulsoeacetatfasern oder deren Gemische enthält.